# EUROPEAN PATENT APPLICATION

(11) **EP 3 295 821 A1**
(43) Date of publication of application: **21.03.2018**
(21) Application number: 16188958.9
(22) Date of filing: 15.09.2016
(51) Int. Cl.: A45D 8/00, F21S 10/02, F21V 8/00

(54) **HAIR ORNAMENT AND METHOD OF CONTROLLING A HAIR ORNAMENT**

(71) Applicant: The Procter & Gamble Company, Cincinnati, OH 45202 (US)
(72) Inventor: AMANN, Mathias, 61476 Kronberg/Taunus (DE); HERRLEIN, Mathias, 65824 Schwalbach am Taunus (DE); FRANKE, Michael, 61476 Kronberg/Taunus (DE); DORBER, Ralf, 61476 Kronberg/Taunus (DE)
(74) Representative: Briatore, Andrea

(57) **Abstract**

A hair ornament comprises a light source, a controller, and a plurality of filaments configured to emit light through their side walls. The controller controls the light source based at least in part on a measurement from a sensor. A control device comprises a communications interface and a sensor. It optionally comprises a processor for generating a control signal based on a measurement signal from the sensor. Also disclosed is a method for controlling a hair ornament.

## Description

### FIELD OF THE INVENTION

The present invention relates to a hair ornament. In particular, it relates to a hair ornament comprising a light source and a plurality of light-transmissive filaments. It also relates to control of the light source in this hair ornament.

### BACKGROUND OF THE INVENTION

A hair ornament comprising a light source and a plurality of light-transmissive filaments is known from US 2003/0156429 A1. The light source comprises three Light Emitting Diodes (LEDs). Light from the LEDs is focused on the end of a bundle of optical fibers, which transmit the light to positions remote from the light source and battery. This allows a wearer's hairstyle to be embellished by discrete points of light, created at the free ends of the optical fibers. The color of the light can be modified by manually controlling the duty cycle of each of the three LEDs independently of the others.

This provides limited control of the lighted hair ornament. Only the color can be changed, and this happens only when the user/wearer actively and manually makes this happen. This may be tedious and inconvenient for the user. If the user does not actively change the color, it stays fixed, leading to an uninteresting appearance.

### SUMMARY OF THE INVENTION

The invention is defined by the claims. According to one aspect of the invention, there is provided a hair ornament comprising:
a light source;
a controller configured to control the light source; and
a plurality of light-transmissive filaments, each filament having:
   a proximal end configured to receive light from the light source;
   a distal end; and
   a side wall,
wherein each filament is configured to emit at least a portion of the light received from the light source through the side wall of the filament,
wherein the controller comprises:
   an input configured to receive a measurement signal from a sensor; and
   an output coupled to the light source, for supplying a control signal to the light source, and
wherein the controller is configured to generate the control signal based at least in part on the measurement signal.

The present inventors have recognized that it would be desirable to provide an enhanced hair ornament with enhanced control. According to an embodiment, the hair ornament is enhanced by configuring the filaments to emit light through their side walls. In contrast to the constellation of points of light created by the optical fibers in prior hair ornaments, this can allow the filaments to glow as if strands of hair were themselves emitting light. This can make the hair ornament more prominent and can make the hairstyle adorned by the ornament more attractive and interesting to look at.

According to an embodiment, the light source is controlled based on measurements from the sensor so that it automatically responds to changes in the parameter measured by the sensor. This can reduce the amount of user-interaction needed to control the ornament, or can increase the variability of its appearance, or both. Increasing the variability of appearance, combined with the greater prominence of the glowing filaments, is believed to make the hair ornament more eye-catching. It can also allow the ornament to adapt automatically to changing surroundings or circumstances.

The measurement signal may directly characterize a measured physical parameter, or it may be a derivative signal, derived at least in part from a measurement of a physical parameter.

The sensor may be comprised in the hair ornament or may be remote from the hair ornament. It may be coupled to the ornament by wires or wireless communication.

The hair ornament preferably further comprises a fastening for releasably attaching the ornament to the hair or head of the wearer. The fastening may comprise a hair-band, grip, clip, pin, comb, jaws or clamp, for example.

The light source preferably comprises one or more LEDs.

The control signal preferably controls at least one of: switching on or off of the light source; a variable brightness of the light source; a variable hue of the light source; and a variable color saturation or chroma of the light source.

The measurement signal may comprise a measurement of at least one of: a geographic location; an ambient environmental parameter; and a biological parameter.

The ambient environmental parameter optionally comprises at least one or any combination of two or more of: an ambient light intensity; an ambient light hue; an ambient light color saturation or chroma; an ultraviolet light intensity; an atmospheric pressure; a humidity; and an ambient temperature.

According to an embodiment, the measurement signal comprises a measurement of ambient light intensity; and the control signal controls a variable brightness of the light source, such that the brightness of the light source is controlled in direct relation to the ambient light intensity. This provides automatic dimming and brightening of the ornament.

According to an embodiment, the measurement signal comprises a measurement of ambient temperature and/or humidity; and the control signal controls a variable brightness, hue, or chroma of the light source. In this way, the appearance of the ornament can adapt automatically to changing weather or indoor environmental conditions and/or can provide a graphical indicator of the conditions.

According to an embodiment, the control signal controls a variable brightness, hue, or chroma of the light source in response to a rate of change of an environmental parameter.

The biological parameter optionally comprises at least one or any combination of two or more of: a body temperature of a wearer of the hair ornament; a skin humidity of the wearer; a skin condition of the wearer; a heart rate of the wearer.

According to an embodiment, the measurement signal comprises a measurement of body temperature, heart rate, and/or skin humidity; and the control signal controls a variable brightness, chroma, or hue of the light source, such that the appearance of the ornament changes in direct relation to a level of physical exertion of the wearer.

According to an embodiment, the control signal controls a variable brightness, hue, or chroma of the light source in response to a rate of change of a biological parameter.

In some embodiments, the hair ornament may further comprise the sensor from which the controller is configured to receive the measurement signal.

In some embodiments, the controller comprises a first communications interface configured to receive the measurement signal from a remote sensor.

The first communications interface may comprise a wired or wireless communications interface. A wireless communications interface may comprise one of a Bluetooth, WLAN or other Radio Frequency (RF) communications interface.

The controller may comprise a second communications interface configured to receive data from a remote server computer, wherein the controller is configured to generate the control signal based at least in part on the received data.

This can allow the light source to be controlled automatically based on cloud data. For example, the light source can adapt automatically to current fashion trends, based on data from a remote server computer delivered via the second communications interface.

Optionally, the received data relates to a social network profile or a social network group. The profile may be associated with a wearer of the hair ornament. The group may be a group of which the wearer is a member.

According to another aspect of the invention, there is provided a control device comprising:
a sensor, configured to sense a physical parameter and to generate a measurement signal characterizing that parameter; and
a first communications interface, configured to transmit the measurement signal to the controller of a hair ornament comprising a light source and a plurality of light-transmissive filaments.

According to still another aspect of the invention, there is provided a control device comprising:
a sensor, configured to sense a physical parameter and to generate a measurement signal characterizing that parameter;
a processor, configured to generate a control signal based at least in part on the measurement signal; and
a first communications interface, configured to transmit the control signal to a controller of a hair ornament comprising a light source and a plurality of light-transmissive filaments, for controlling the light source.

The control device may be a portable or wearable electronic device, preferably one of: a smart phone, a smart watch, an item of eyewear, and an item of jewelry.

The control device may further comprise a second communications interface, configured to receive data from a remote server computer, wherein the processor is configured to generate the control signal based at least in part on the received data.

According to a further aspect of the invention, there is provided a method of controlling a hair ornament as summarized above, the method comprising:
sensing a physical parameter;
generating a measurement signal characterizing that parameter;
generating a control signal based at least in part on the measurement signal; and controlling the light source with the control signal.

The method may further comprise: storing behavior data describing a historical usage pattern of the hair ornament by a wearer; and generating the control signal based at least in part on the behavior data.

According to a still further aspect there is provided a non-transitive computer readable medium having embodied thereon a computer program comprising computer program code configured to control a portable electronic device to perform all the steps of a method as summarized above, when said program is run on the device.

### BRIEF DESCRIPTION OF THE DRAWINGS

The invention will now be described by way of example with reference to the accompanying drawings, in which:
Fig. 1 is a schematic block diagram of a hair accessory according to a first embodiment of the invention;
Fig. 2A is a schematic block diagram of a hair accessory according to a second embodiment;
Fig. 2B is a block diagram of a control device according to the second embodiment;
Fig. 3 is a schematic block diagram of a hair accessory according to a third embodiment;
Fig. 4 is a block diagram of a control device according to a fourth embodiment; and
Fig. 5 is a flowchart illustrating a method according to an embodiment of the invention.

### DETAILED DESCRIPTION OF THE INVENTION

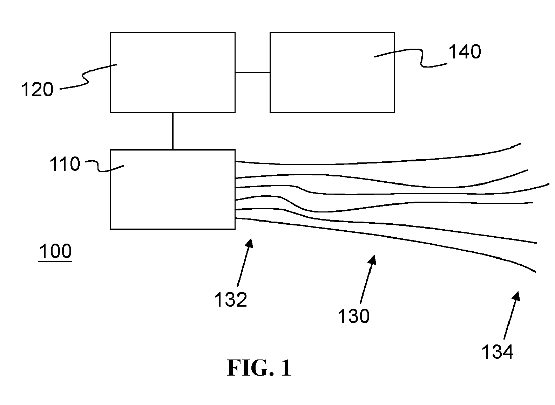

Fig. 1 is a block diagram of a hair ornament 100 according to a first embodiment. The hair ornament 100 comprises a light source 110; a controller 120; and a plurality of light-transmissive filaments 130. It further comprises a sensor 140. The sensor 140 is coupled to an input of the controller 120 for supplying a measurement signal from the sensor to the controller.

The controller 120 is coupled to the light source 110 for supplying a control signal to the light source. Each of the filaments 130 has a proximal end 132, a distal end 134, and a side wall. The proximal end of each filament is optically coupled to the light source 110 to receive light from the light source. Each filament is configured to emit at least some of the light received from the light source through the side wall of the filament.

In this embodiment, the light source 110 comprises one or more LEDs. These are controlled by the control signal from the controller 120. For example, the controller can control the brightness of the LEDs by controlling the amplitude of a current supplied to the LEDs or by pulse width modulation of the control signal. If there is just a single LED, each of the filaments 130 are optically coupled to this LED so that the brightness of all the filaments is controlled together. If there are multiple LEDs, different filaments may be optically coupled to different LEDs. This can allow the brightness of different filaments (or different sets of filaments) to be controlled independently. The color of the light emitted by the filaments may be controlled by providing LEDs of different colors. For example, the light source 110 may comprise a red LED, a blue LED, and a green LED. Light from all three of these LEDs is coupled into all of the filaments 130. By controlling the brightness of the differently colored LEDs independently, the light source 110 can mix together the primary colors in different proportions, thereby controlling not only the brightness of the light coupled into the filaments but also its color saturation and/or hue.

The controller 120 preferably comprises a microprocessor, configured to process the measurement signal received from the sensor 140 to generate an appropriate control signal for the light source 110.

The sensor 140 may be one of a variety of different types of sensor, depending on the physical parameter to which it is desired to adapt the operation of the hair ornament 100. For example, if it is desired for the hair ornament to adapt to an ambient brightness or light intensity of the environment, then the sensor 140 may comprise a photo diode. The signal from the photo diode is processed by the microprocessor in the controller 120 to generate a control signal for the light source 110 so that the brightness of the light source increases when the ambient light intensity increases. In this way, the brightness of the hair ornament can adapt to the surroundings so that it is bright enough to be visible in brightly lit environments but automatically dims in dark environments.

The hair ornament 100 of Fig. 1 is self-contained in that it is does not need to receive signals from any external device and the sensor 140 is integrated with the hair ornament 100. However, this is not essential.

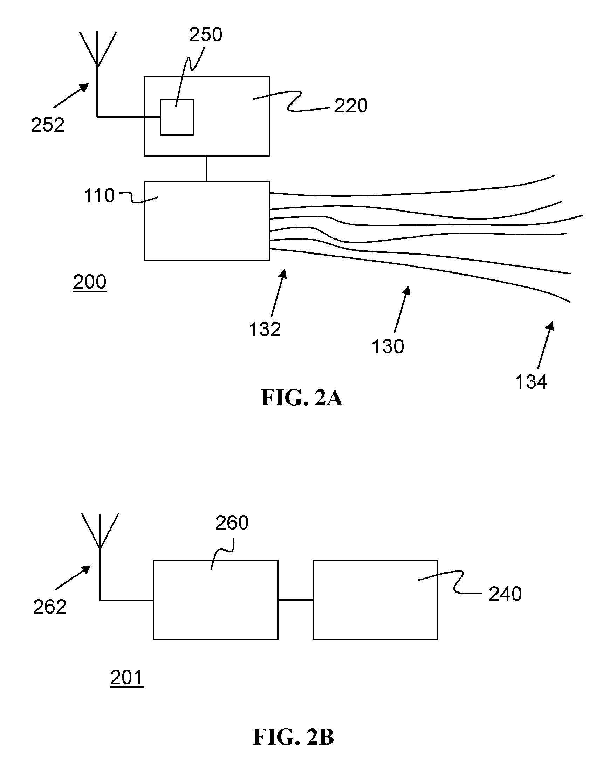

Fig. 2A is a block diagram of a hair ornament according to a second embodiment. The light source 110 and filaments 130 of this embodiment are the same as those of the first embodiment shown in Fig. 1. However, unlike the first embodiment, there is no integrated sensor in the hair ornament 200. Instead, the controller 220 comprises a communications interface 250 for receiving the measurement signal from a remote sensor. The communications interface 250 is preferably a wireless communications interface, such as a Bluetooth interface. Accordingly, the interface 250 is coupled to an antenna 252 for receiving the measurement signal wirelessly. The other functions of the controller 220 are similar to those of the controller 120 in the first embodiment.

Fig. 2B is a block diagram of a control device 201 according to the second embodiment. This control device 201 is suitable for use with the hair ornament 200 of Fig. 2A. The control device 201 comprises a sensor 240 and a communications interface 260. The sensor 240 is configured to sense a physical parameter and to generate a measurement signal characterizing that parameter. The sensor may be of the same type as the sensor 140 in the first embodiment. The communications interface 260 is configured to receive the measurement signal from the sensor 240 and transmit the measurement signal to the controller 220 of the hair ornament 200. Preferably, the communications interface 260 is a wireless communications interface, such as a Bluetooth interface. Accordingly, the interface 260 is coupled to an antenna 262 for transmitting the measurement signal wirelessly.

The embodiment of Figs. 2A-2B can function in a similar way to the first embodiment but the control device 201 and its sensor 240 can now be located remotely from the hair ornament 200. This can allow greater versatility, because the sensor 240 no longer needs to be located on the head of the wearer. This can also allow greater flexibility in the types of sensor used and the types of physical parameter sensed and used to control the hair ornament 200.

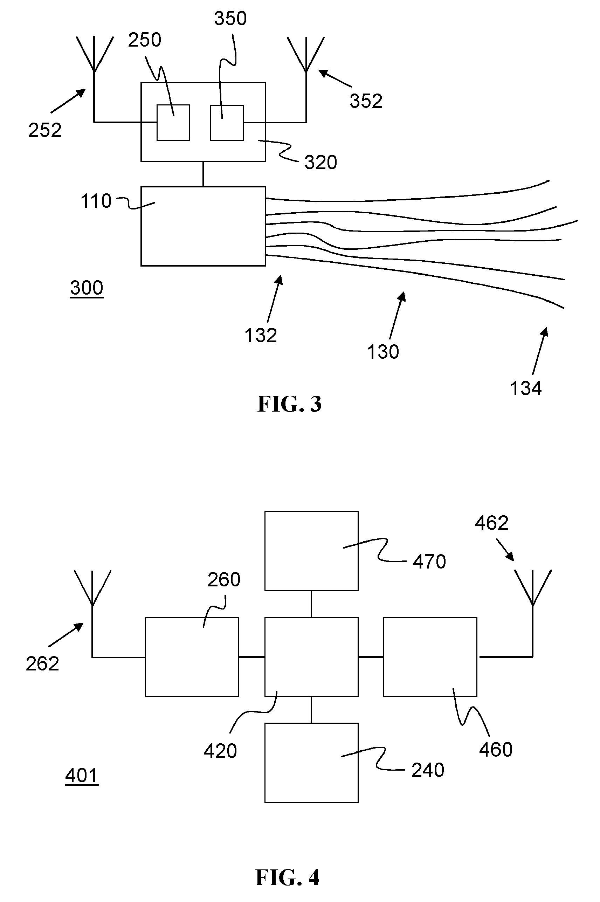

Fig. 3 shows a block diagram of a hair ornament 300 according to a third embodiment. This hair ornament 300 is a more advanced version of the hair ornament 200 of the second embodiment, in that the controller 320 of the third embodiment comprises a second communications interface 350 in addition to the first communications interface 250 for receiving the measurement signal. The second communications interface 350 is configured to receive data from a remote server computer. The controller 320 is configured to generate the control signal for the light source 110 based on the data received from the remote server in combination with the measurement signal received from the sensor 240. The second communications interface 350 is also preferably a wireless interface. For example, it may be a wireless LAN interface or a cellular data communications interface. Accordingly, an antenna 352 is provided for receiving a radio signal from a wireless network access point or a cellular base station, respectively. The second communications interface 350 allows the controller to communicate with the remote server, for example via the internet. This can allow the controller 320 to generate the control signal for the light source 110 based on broader contextual information together with the measurement signal. In one embodiment, the data received via the second communications interface 350 relates to online social network activities such as a social network profile associated with the wearer of the hair ornament or a social network group of which the wearer is a member. This can allow the controller 320 to adapt its control of the light source 110 based on social network information such as status updates or trends.

The hair ornament 300 of the third embodiment can be used with the control device 201 of the second embodiment (Fig. 2B).

Fig. 4 is a block diagram of a control device according to a fourth embodiment. The control device 401 of this embodiment is more complex than the control device 201 of the second embodiment. However, it includes the same core components of a sensor 240 and a communications interface 260. In this embodiment, the control device 401 further comprises a processor 420; a memory 470; and a second communications interface 460. The processor 420 is coupled to the sensor 240 to receive the measurement signal. The processor is configured to generate a control signal based at least in part on the measurement signal from the sensor 240 and is coupled to the first communications interface 260 for transmitting the control signal to the controller 220 of a hair ornament 200. The processor 420 is coupled to the memory 470 for storing and retrieving data. The second communications interface 460 is also coupled to the processor 420. The second communications interface 460 is configured to receive data from a remote server computer. In this regard, it is similar to the second communications interface 350 of the hair ornament 300 of the third embodiment. An antenna 462 is associated with the second communications interface 460, for receiving the data wirelessly.

In the fourth embodiment, the intelligent control of the hair ornament is centralized to a greater extent in the control device 401. Instead of simply transmitting a raw measurement signal from the sensor 240, like the control device 201 of the second embodiment, the processor 420 of the control device 401 is configured to process the measurement signal from the sensor 240 and optionally to combine it with other information, in order to generate a control signal which can be transmitted to the hair ornament via the first communications interface 260.

The processor 420 may receive data from a remote server computer, via the second communications interface 460 and may use this to adapt the control of the hair ornament 200. Alternatively or in addition, the processor 420 may store behavior data in the memory 470. The processor 420 may then use this behavior data to generate the control signal so that the control of the hair ornament 200 is adapted based on a historical usage pattern of the hair ornament by a wearer. Combining the information provided by the sensor 240 with data from a remote server computer and/or behavior data stored in the memory 470 may allow more sophisticated control of the hair ornament 200.

The control device 401 of Fig. 4 can be used with a hair ornament similar to the hair ornament 200 of Fig. 2A. However, since the processing of the measurement signal is performed by the processor 420 of the control device 401, the burden on the controller 220 of the hair ornament 200 to generate the control signal for the light source 110 is reduced. For example, the controller may simply decode the control signal transmitted by the control device 401 and supply the decoded control signal to the light source 110.

The control devices 201 and 401 are preferably portable or wearable electronic devices. For example, the control device 201 may be implemented as an item of jewelry separate from the hair ornament, such as a necklace, pendant, brooch, or bracelet. Similarly, it could be implemented in an item of eye wear. The more advanced control device 401 may be implemented for example as a smart phone or smart watch. Such devices are particularly preferred because they may already include all of the necessary hardware components to implement the control device 401. In particular, smart phones and smart watches typically include a processor, suitable sensors, and suitable communications interfaces. Therefore, the control device 401 could be implemented by programming the smart phone or smart watch appropriately to use the existing hardware components. In particular, a smart phone or smart watch could be configured as a control device 401 by installing an app.

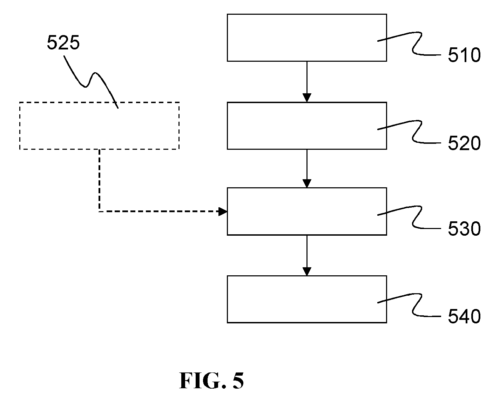

Fig. 5 is a flow chart illustrating a method according to an embodiment of the invention. In step 510, a physical parameter is sensed using a sensor 140 or 240. In step 520, the sensor generates a measurement signal characterizing that parameter. In step 530, a control signal is generated based at least in part on the measurement signal. The generation of this control signal may be performed by a controller 120, 220, or 320 of a hair ornament or maybe performed remotely from the hair ornament in a processor 420 of a control device 401. Step 540 comprises controlling the light source based on the control signal generated in step 530. As will be apparent to those skilled in the art, if the control signal is generated remotely from the hair ornament in step 530, then the method may further comprise an intermediate step of transmitting the control signal to the hair ornament.

Optionally, the method further comprises a step 525 of storing behavior data describing a historical usage pattern of the hair ornament by a user/wearer. In this case, the step 530 of generating the control signal is based in part on the behavior data and in part on the measurement signal generated in step 520. The method of Fig. 5 can be performed by the hair ornament 100 of Fig. 1; by the hair ornament 200 of Fig. 2A in conjunction with the control device 201 of Fig. 2B or control device 401 of Fig. 4; or by the hair ornament 300 of Fig. 3 in conjunction with the control device 201 of Fig. 2B or control device 401 of Fig. 4. Other permutations and combinations for distributed implementations are also possible.

The following are some examples of how hair ornaments according to the invention can be controlled.

### Example 1

The hair ornament may be configured to respond to changes in ambient environmental parameters, such as temperature or humidity. For example, the sensor 140 or 240 may comprise a temperature sensor and a humidity sensor. The control signal may be generated in response to the temperature and humidity measurements so that the light source turns blue when it is raining (that is, in response to high or increasing humidity) and turns red when it is hot (that is, in response to high or increasing temperature).

### Example 2

In another example relying on ambient environmental parameters, the sensor 140 or 240 comprises an atmospheric pressure sensor. The control signal may be generated in response to the pressure measurements so that the hue of the light source changes to blue in response to falling atmospheric pressure and changes to red in response to rising atmospheric pressure. In this way, the color (hue) of the light emitted by the hair ornament provides a simple indication of the weather forecast - red indicates increasing likelihood of fair weather; blue indicates increasing likelihood of rain.

### Example 3

In other examples, the hair ornament may be configured to respond to biological parameters, such as body temperature or skin humidity (or changes in such parameters). For example, the sensor 140 or 240 may comprise a body temperature sensor and a skin humidity sensor. The control signal may be generated in response to the body temperature and skin humidity measurements so that the light source turns to blue when the wearer is cold (that is, in response to low body temperature) and turns to orange when the wearer is warm (that is, in response to high or increasing temperature and/or high or increasing skin humidity). This allows the hair ornament to reflect the level of exertion of the wearer. The hair ornament turns blue when the wearer is at rest and cool; and turns orange when the wearer engages in strenuous physical activity.

### Example 4

In another example relying on a biological parameter, the sensor 140 or 240 comprises a heart-rate sensor, for measuring the wearer's pulse. The control signal may be generated in response to the pulse so that the light source turns yellow when the pulse is low and turns purple when the pulse is high. Alternatively or in addition, the control signal may be generated such that it responds to changes in pulse. For example, the control signal may turn the light source to a pink hue in response to a sudden increase in heart-rate, indicating surprise or excitement.

This example can be combined with Example 3. For instance, a color saturation of the light source may be controlled in direct relation to the wearer's body temperature and/or skin humidity, which a hue of the light source may be dependent on the wearer's pulse.

### Example 5

In this example, the sensor 140 or 240 comprises an accelerometer. The control signal may be generated so that the light source flashes or pulses its brightness in time with a periodic acceleration pattern detected by the accelerometer. For example, the accelerometer may operate as a pedometer so that the hair ornament can flash or pulse in time with the steps of the wearer when walking. Similarly, the hair ornament can be made to flash in time with rhythmical movements as the wearer dances. Other parameters of the light source can be controlled as well as or instead of the brightness. For example, the color of the light may be cycled with a periodicity defined by the accelerometer measurements. The period of the control signal may be the same as the period of the acceleration, or may be a multiple or fraction of that period.

### Example 6

In another example, the hair ornament may be configured to switch on automatically indoors and/or switch off automatically outdoors in bright sunlight. In bright sunlight, the glow of the hair ornament may not be visible. It may be preferable to switch it off rather than try to increase the brightness and thereby waste battery.

These functions can be implemented by a combination of an ultraviolet (UV) light sensor and a Global Positioning System (GPS) sensor, which produces measurements of geographic location. When the ambient UV level is high and the GPS sensor has a GPS fix, the hair ornament is likely to be outdoors. When the ambient UV level is low and there is no GPS fix, the hair ornament is likely to be indoors.

### Example 7

Behavior data can be incorporated into the control algorithm to further enhance the automatic control of the hair ornament. For example, the behavior data may indicate a correlation between a location of the wearer and a desired operating state. The control device 401 can use this behavior data to predict a desired operating state of the hair ornament, and can then control the light source accordingly.

For example, the wearer might habitually switch off the hair ornament at work, or might habitually switch on the hair ornament at a nightclub. The control device 401 may learn this (for example using a neural network or other suitable pattern recognition technique known in the art) and may automatically switch the hair ornament on and off in response to the position indicated by the GPS sensor.

The wearer might habitually switch on the hair ornament between 5pm (when the wearer leaves work) and 10pm (when the wearer goes to bed). The control device 401 may learn this and may automatically switch off the hair ornament at 10:00pm, in case the wearer has forgotten to switch it off before going to bed.

### Example 8

In addition to responding to measurements by the sensor 140 or 240, the hair ornament can also be controlled based on data retrieved from a remote server. In particular, it may be advantageous to control the hair ornament based on social network data from a social network profile or group associated with the wearer.

In one example, the light source is controlled to adopt an appearance corresponding to a currently popular fashion trend. When the wearer is a member of a social media group and a number of members of that group adopt a particular appearance for their own hair ornaments, the hair ornament of the wearer may automatically adapt to the same appearance. The appearance could comprise a particular color, combination of colors, or color sequence of the light generated by the light source. The appearance could also comprise a specific pattern of flashing or pulsing. This can allow the hair ornament to automatically emulate the latest trends.

This example can be combined with any of the preceding examples, so that the hair ornament is controlled based on social network information in combination with sensor measurements and/or behavioral data.

For instance, control based on a social network group can be combined with control based on a position sensor, such as a GPS sensor. The hair ornament can be controlled to adopt an appearance that is popular within the group only when the wearer is in approximately the same location as one or more other members of the group.

### Example 9

In another example relying on social media information, the hair ornament may be controlled according to the identity of a sports team supported by the wearer. The wearer's favorite team can be determined from the wearer's social media profile. In response to determining the team, the light source can be controlled to produce light matching the team's colors. For example, if the team colors are blue and white, the light source may couple blue light into some of the filaments and may couple white light into other filaments. If the hair ornament is only capable of displaying one color at a time, the color of the light source may be controlled so that it alternates between blue and white.

The control based on the wearer's social network profile may be combined with control based on sensor data (and optionally behavior data) as follows. The sensor 140 or 240 may comprise a GPS sensor. The hair ornament may be controlled so that the team colors are only displayed when the wearer is close to a sporting venue associated with the team. For example, the team colors might be displayed when the wearer is located in the same city as the team's home stadium. Optionally, the control device may learn from a combination of behavioral data and remote server information that the wearer wears the hair ornament in the team colors whenever the team is playing. The hair ornament may then be controlled to automatically display the team colors when the team is playing, in future.

As mentioned previously above, the filaments are configured to emit light through their side walls, to create the impression of a glowing strand. There are a variety of ways to produce filaments having this property. One exemplary method is described below.

In this example, filaments were prepared by laser-ablation. The starting optical fiber for this example was a plastic optical fiber marketed by Asahi Kasei E-Materials Corporation under the product designation DB-175. This comprises a PMMA core and a fluorinated polymer cladding.

A carbon dioxide (CO₂) laser with wavelength 10 µm and 30W power was used for laser ablation. The laser is designed to cut plastic and textiles but has an engraving mode at which it emits approximately 25% of the maximum output power. This engraving mode was used to ablate the cladding selectively.

A bundle of about 30 fibers were engraved together. Each fiber had a diameter of 175 µm ±15 µm. The fibers were laid out side by side. The fibers were engraved intermittently along their length by pulsing the laser to create separate exposed areas. The fibers were held fixed. The laser was scanned across the bundle, to engrave all of the side-by-side fibers, and scanned longitudinally along the length of the fibers to engrave each fiber intermittently over its length. The exposed areas where the cladding was ablated by the laser were arranged more densely toward the distal end of the fibers and less densely towards the proximal end. The density gradient was approximately linear over the length of each fiber. The size of each exposed area was substantially constant over the length of each fiber, while the spacing between exposed areas reduced (approximately linearly) from the proximal end to the distal end. The laser beam was oriented substantially perpendicular to the longitudinal axis of the fibers. The cladding was removed on the side of the fibers facing the laser source. It was also removed on the side facing away from the laser source, because the core acts like a cylindrical lens, focusing the laser beam.

The laser-ablation was controlled so that a greater proportion of the cladding was removed in a first segment, closer to the distal end of the filament, compared with a second segment, closer to the proximal end of the filament. The proportion of light escaping in a given segment of unit length varies in direct relation to the proportion of exposed area.

The laser power is preferably selected so that all of the cladding is removed, at the sites where the beam strikes the fiber. In general, it may be difficult to select a laser power that removes all of the cladding while leaving the core completely unscathed. Therefore, in order to ensure that all of the cladding is removed it may be necessary to set the laser power so that a small amount of core material is also removed.

In one embodiment, the laser is controlled to create "scratches" spaced at intervals along the length of each filament. Each scratch is formed by one or more scribe lines created by laser ablation. Each scribe line corresponds to one pass of the laser. In one example, the spot size of the laser is 30 µm in diameter. The number of scribe lines per scratch is increased towards the distal end of the filament. This increases the proportion of exposed area towards the distal end. In general, the scratches may be evenly or unevenly spaced over the length of the filament.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The embodiments may be implemented by means of hardware comprising several distinct elements. In the device claim enumerating several means, several of these means may be embodied by one and the same item of hardware. The mere fact that certain measures are recited in mutually different dependent claims does not indicate that a combination of these measures cannot be used to advantage. Furthermore, in the appended claims lists comprising "at least one of: A; B; and C" should be interpreted as (A and/or B) and/or C.

Furthermore, in general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments as discussed herein may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A hair ornament comprising:
a light source;
a controller configured to control the light source; and
a plurality of light-transmissive filaments, each filament having:
a proximal end configured to receive light from the light source;
a distal end; and
a side wall,
wherein each filament is configured to emit at least a portion of the light received from the light source through the side wall of the filament,
wherein the controller comprises:
an input configured to receive a measurement signal from a sensor; and
an output coupled to the light source, for supplying a control signal to the light source, and
wherein the controller is configured to generate the control signal based at least in part on the measurement signal.

2. The hair ornament of claim 1, wherein the control signal controls at least one of:
switching on or off of the light source;
a variable brightness of the light source;
a variable hue of the light source; and
a variable color saturation or chroma of the light source.

3. The hair ornament of claim 1 or claim 2, wherein the measurement signal comprises a measurement of at least one of:
a geographic location;
an ambient environmental parameter; and
a biological parameter.

4. The hair ornament of claim 3, wherein the ambient environmental parameter comprises at least one or any combination of two or more of:
an ambient light intensity;
an ambient light hue;
an ambient light color saturation or chroma;
an ultraviolet light intensity;
an atmospheric pressure;
a humidity; and
an ambient temperature.

5. The hair ornament of claim 3, wherein the biological parameter comprises at least one or any combination of two or more of:
a body temperature of a wearer of the hair ornament;
a skin humidity of the wearer;
a skin condition of the wearer;
a heart rate of the wearer.

6. The hair ornament of any one of the preceding claims, further comprising the sensor from which the controller is configured to receive the measurement signal.

7. The hair ornament of any one of claims 1 to 5, wherein the controller comprises a first communications interface configured to receive the measurement signal from a remote sensor.

8. The hair ornament of any one of the preceding claims, wherein the controller comprises a second communications interface configured to receive data from a remote server computer,
wherein the controller is configured to generate the control signal based at least in part on the received data.

9. The hair ornament of claim 8, wherein the received data relates to a social network profile or a social network group.

10. A control device comprising:
a sensor, configured to sense a physical parameter and to generate a measurement signal characterizing that parameter; and
a first communications interface, configured to transmit the measurement signal to the controller of a hair ornament comprising a light source and a plurality of light-transmissive filaments.

11. A control device comprising:
a sensor, configured to sense a physical parameter and to generate a measurement signal characterizing that parameter;
a processor, configured to generate a control signal based at least in part on the measurement signal; and
a first communications interface, configured to transmit the control signal to a controller of a hair ornament comprising a light source and a plurality of light-transmissive filaments, for controlling the light source.

12. The control device of claim 10 or claim 11, wherein the control device is a portable or wearable electronic device, preferably one of: a smart phone, a smart watch, an item of eyewear, and an item of jewelry.

13. The control device of any one of claims 10 to 12, further comprising a second communications interface, configured to receive data from a remote server computer,
wherein the processor is configured to generate the control signal based at least in part on the received data.

14. A method of controlling a hair ornament according to any one of claims 1 to 9, the method comprising:
sensing a physical parameter;
generating a measurement signal characterizing that parameter;
generating a control signal based at least in part on the measurement signal; and
controlling the light source with the control signal.

15. The method of claim 14, further comprising:
storing behavior data describing a historical usage pattern of the hair ornament by a wearer; and
generating the control signal based at least in part on the behavior data.

16. A non-transitive computer readable medium having embodied thereon a computer program comprising computer program code configured to control a portable electronic device to perform all the steps of claim 14 or claim 15, when said program is run on the device.
